(19) Europäisches Patentamt
European Patent Office
Office européen des brevets

(11) Publication number : **0 337 638 B1**

(12) **EUROPEAN PATENT SPECIFICATION**

(45) Date of publication of patent specification :
04.03.92 Bulletin 92/10

(51) Int. Cl.⁵ : **B60Q 1/04**

(21) Application number : **89303257.3**

(22) Date of filing : **03.04.89**

(54) Motor vehicle lamp assembly.

(30) Priority : **14.04.88 GB 8808822**

(43) Date of publication of application :
**18.10.89 Bulletin 89/42**

(45) Publication of the grant of the patent :
**04.03.92 Bulletin 92/10**

(84) Designated Contracting States :
**DE ES FR GB IT**

(56) References cited :
**DE-A- 1 505 609**
**DE-A- 3 616 694**
**US-A- 4 325 105**

(73) Proprietor : **CARELLO LIGHTING PLC**
**Walkmill Lane, Bridgetown**
**Cannock, Staffordshire WS11 2LP (GB)**

(72) Inventor : **Shah, Manshukh Bhagwanji**
**12 Glastonbury Close Hillcroft Park**
**Stafford, ST17 OPB (GB)**

(74) Representative : **Pearce, Anthony Richmond et al**
**MARKS & CLERK Alpha Tower Suffolk Street**
**Queensway Birmingham B1 1TT (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a motor vehicle lamp assembly and, particularly, but not exclusively, to an automobile headlamp assembly.

Automobile headlamp assemblies as supplied to the automobile manufacturer generally comprise a dished reflector body containing a light source; and a support member (often in the form of a housing) on or in which the reflector body is mounted for pivotal movement. The support member is designed to be fixedly secured to the automobile body. The reflector body is usually pivotally mounted on the support member by a three-point pivot system which allows pivotal movement of the reflector body independently in a vertical plane and in a horizontal plane to enable the headlamp to be set correctly to provide optimum illumination of the road without dazzling other road users. In many cases, one of the points of the three-point pivot system has a specially designed adjusting mechanism associated therewith for facilitating tilting adjustment of the reflector body particularly about a horizontal axis because this is often desirable or necessary in order to compensate for changes in the attitude of the automobile body under different load conditions. The nature of the adjusting mechanism can vary considerably and may range from a simple rotary manual adjustment knob on a screw-threaded rod mounted on the support member and engaged with the reflector body, to a fully automatic adjusting mechanism causing pivotal movement of the reflector body automatically in accordance with changes in the attitude of the vehicle body as monitored by a sensor. In between these extremes, there exist adjusting mechanisms which include levers and rods to facilitate manual adjustment and remote adjusting mechanisms which can be manually operated from the driver's seat. Thus, it is not practicable for the lamp assembly manufacturer to supply the lamp assembly with the particular adjusting mechanism required by the vehicle manufacturer since this may vary considerably, as noted above. However, this provides a problem, particularly in the case where the support member is in the form of a housing which completely envelopes the dished reflector body, since the pivotal mounting of the reflector body relative to the support member makes it difficult successfully to engage the chosen adjusting mechanism with the appropriate formation on the reflector body without risk of damaging either the reflector body or the adjusting mechanism.

An object of the present invention is to provide a motor vehicle lamp assembly which is designed to facilitate the job of fitting onto a motor vehicle with the motor vehicle manufacturer's choice of adjusting mechanism.

According to the present invention, there is provided a motor vehicle lamp assembly comprising a reflector body; a support member adapted to be fixedly secured to a motor vehicle; pivot means mounting the reflector body on the support member for pivotal movement of the reflector body thereon; and a formation on the reflector body adapted to be engaged by an adjusting mechanism, in use, such that operation of the adjusting mechanism pivots the reflector body relative to the support member; characterized in that a retaining device extends between the reflector body and the support member and is adapted to retain the reflector body against pivotal movement relative to the support at least during engagement of the adjusting mechanism with said formation, said retaining device being disengageable to enable pivoting of the reflector body relative to the support member when the adjusting mechanism has been engaged with said formation on the reflector body.

The retaining device preferably takes the form of a strap attached to one of the reflector body and the support member, and a bracket attached to the other of the reflector body and the support member, the strap being engageable with and disengageable from the bracket respectively to prevent and permit pivotal movement of the reflector body relative to the support member.

Preferably, the strap is resilient and the bracket includes a ramp surface leading to a recess in the bracket, the arrangement being such that the strap is deflected by the ramp surface upon pivotal movement of the reflector so that the strap can automatically latch into the recess.

In the case where the support member is apertured to permit the adjusting mechanism to be engaged with the formation on the reflector body, it is preferred for the bracket to be disposed adjacent the aperture so that the strap can be manually disengaged therefrom, access to the bracket being provided by the aperture. With such an arrangement, it is preferred for a plate or cover to be provided which covers the aperture and which also serves, when in position, to prevent the strap from automatically engaging in the bracket. Such plate may also provide a secure mounting for a part of the adjusting mechanism which is to be attached to the support member.

An embodiment of the present invention will now be described, by way of example, with reference to the accompanying drawings, in which:-

Fig. 1 is a horizontal section through part of an automobile headlamp assembly according to the present invention,

Fig. 2 is a view on arrow A of Fig. 1, and

Fig. 3 is a view on arrow B of Fig. 1.

Referring now to the drawings, the automobile headlamp assembly comprises a support member in the form of a housing 10 including a transparent front cover 12. The housing 10 completely encloses a dished reflector body 14. The reflector body 14 has three part-spherical, snap-fit sockets 16 secured thereto.

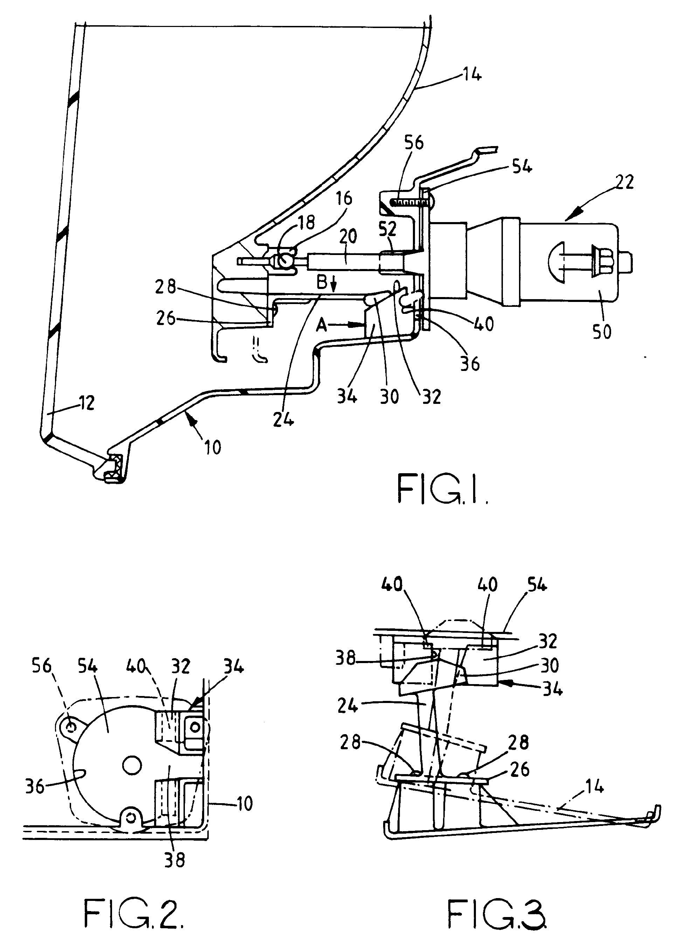

Only one of these sockets 16 is illustrated, the other two sockets being spaced apart laterally of the headlamp so that they lie in the same horizontal plane which is displaced from the plane of the section illustrated in Fig. 1. The sockets 16 all lie in the same vertical plane. The two sockets which are not illustrated are each snap-engaged with a spherical end of a respective screw threaded rod which is engaged in a screw-threaded hole (also not shown) in the housing 10. This arrangement is known per se and will be well understood by a person familiar with headlamp technology.

The illustrated socket 16 is arranged to be snap-engaged with a spherical end 18 of a screw-threaded rod 20 forming part of an adjusting mechanism 22 to be described hereinafter in greater detail.

By this means, the reflector body 14 is pivotally mounted within the housing 10 by a three-point pivot system which allows pivotal movement of the reflector body independently about a vertical axis and about a horizontal axis to enable the headlamp to be set correctly to provide for optimum illumination of the road without dazzling other road users. It will be appreciated that axial movement of the rod 20 effects pivoting of the reflector body about the horizontal axis which passes through the two sockets 16 which are not illustrated.

A flexible, synthetic resin strap 24 has a base 26 which is firmly secured to the reflector body 14 by rivets 28. The strap 24 extends rearwardly of the reflector body 14 and has an integrally formed head 30 extending transversely thereof. In the condition illustrated in Fig. 1, the head 30 abuts against an inclined ramp surface 32 of a bracket 34 secured to the inside of housing 10 adjacent an aperture 36 therethrough. The ramp surface 32 has a slot 38 therethrough of a sufficient width to accommodate the narrow part of the strap 24. The bracket 34 further includes a pair of recesses 40 which are disposed on the opposite side of the ramp surface 32 to the reflector body 14. The recesses 40 face rearwardly of the headlamp assembly and are disposed opposite to and adjacent the aperture 36 in the housing 10. When the adjusting mechanism 22 is not mounted in position, the head 30 of the strap 24 can slide up the ramp surface 32 upon appropriate pivotal movement of the reflector body 14 until the head 30 lies behind the ramp surface 32, whereupon it can deflect behind the bracket 34 under its own resilience and engage in the recesses 40 (as shown in dotted line in Figs 1 and 3.) In this position, the reflector body 14 and therefore the illustrated socket 16 is held against movement when snap-fitting the spherical end 18 of the screw threaded rod 20 therein during installation of the headlamp assembly in an automobile.

The adjusting mechanism 22 comprises an electric servo motor 50 operably connected with the rod 20 so that rotation of the motor 50 causes rotation of the rod 20. The rod 20 is carried in a screw-threaded boss 52 on a cover plate 54 secured to the housing 10 by mounting screws 56. The cover plate 54 covers the aperture 36 and also serves to mount the servo-motor 50 in position. The servo motor 50 is connected with appropriate control equipment in a manner known per se so that the angle of tilt of the reflector body 14 about a horizontal axis can be adjusted in accordance with the attitude of the automobile body. This may be either manually effected from a remote location by the driver or automatically effected using a load sensor. Once the spherical end 18 of the screw threaded rod 20 has been engaged with the illustrated socket 16, and before the cover plate 54 has been secured in position, the rod 20 can be moved slightly to the right as viewed in Fig. 1 to bring the head 30 of the strap 24 clear of the recesses 40, the fitter can then insert a finger through the aperture 36 and move the head 30 out of engagement with the bracket. The cover 54 can then be pressed against the housing 10 surrounding the aperture 36 and the screws 56 tightened to secure the adjusting mechanism 22 to the housing 10. Re-engagement of the head 30 in the recesses 40 and inadvertent securing of the plate 54 in position on the housing 10 with the head 30 still engaged in the recesses 40 is prevented because the total length of the strap 24 is chosen in such a way that the reflector body 14 has to be pivoted into a position which is well beyond its normal limit of movement in service in order for the head 30 to engage in the recesses 40. Additionally, there is insufficient clearance between the bracket and the assembled cover 54 to enable passage of the head 30 into the recesses 40.

Whilst the present invention has been described in relation to automobile headlamp assemblies, it will be appreciated that the invention is applicable to any lamp assemblies where engagement of an adjusting mechanism with the reflector body provides a problem.

## Claims

1. A motor vehicle lamp assembly comprising a reflector body (14); a support member (10) adapted to be fixedly secured to a motor vehicle; pivot means mounting the reflector body (14) on the support member (10) for pivotal movement of the reflector body (14) thereon; and a formation (16) on the reflector body (14) adapted to be engaged by an adjusting mechanism (22), in use, such that operation of the adjusting mechanism (22) pivots the reflector body (14) relative to the support member (10); characterized in that a retaining device (24,34) extends between the reflector body (14) and the support member (10) and is adapted to retain the reflector body (14) against pivotal movement relative to the support member (10) at least during engagement of the adjusting mechanism (22) with said formation (16), said retaining device (24,34) being disengageable to enable pivoting of the reflector body (14) relative to the support member (10) when the adjusting mechanism (22) has been engaged with said formation (16) on the reflector body (14).

2. An assembly as claimed in claim 1, wherein the retaining device (24,34) takes the form of a strap (24) attached to one of the reflector body (14) and the support member (10), and a bracket (34) attached to the other of the reflector body (14) and the support member (10), the strap (24) being engageable with and disengageable from the bracket (34) respectively to prevent and permit pivotal movement of the reflector body (14) relative to the support member (10).

3. An assembly as claimed in claim 2, wherein the strap (24) is resilient and the bracket (34) includes a ramp surface (32) leading to a recess (40) in the bracket (34), the arrangement being such that the strap (24) is deflected by the ramp surface (32) upon pivotal movement of the reflector so that the strap (24) can automatically latch into the recess 40.

4. An assembly as claimed in claim 2 or 3, wherein the support member (10) has an aperture (36) to permit the adjusting mechanism (22) to be engaged with the formation (16) on the reflector body (14) and the bracket (34) is disposed adjacent the aperture so that the strap can be manually disengaged therefrom, access to the bracket being provided by the aperture (36).

5. An assembly as claimed in claim 4, including a plate or cover (54) which is adapted to cover the aperture (36) and to prevent the strap (24) from automatically engaging in the bracket (34).

6. An assembly as claimed in claim 5, wherein the plate or cover (54) provides a mounting for a part of the adjusting mechanism (22) which is to be attached to the support member (10).

**Patentansprüche**

1. Scheinwerfereinrichtung für ein Kraftfahrzeug, die einen Reflektor (14) und einen Träger (10), der an dem Kraftfahrzeug fest anbringbar ist, aufweist, bei der der Reflektor (14) für eine Drehbewegung an dem Träger (10) mittels eines Gelenkes angebracht ist und bei der an dem Reflektor (14) ein Gebilde (16) vorgesehen ist, an dem bei Gebrauch ein Verstellmechanismus (22) so angreifen kann, daß eine Betätigung des Verstellmechanismus (22) den Reflektor (14) relativ zu dem Träger (10) dreht, **dadurch gekennzeichnet**, daß eine Sperreinrichtung (24, 34) sich zwischen dem Reflektor (14) und dem Träger (10) erstreckt und dazu geeignet ist, den Reflektor (14) gegen eine Drehbewegung relativ zum Träger (10) zumindest während des Angreifens des Verstellmechanismus (22) an dem Gebilde (16) zu sperren, und daß die Sperreinrichtung (24, 34) außer Eingriff bringbar ist, um ein Drehen des Reflektors (14) relativ zum Träger (10) dann zu ermöglichen, wenn der Verstellmechanismus an dem Gebilde (16) des Reflektors (14) angreift.

2. Scheinwerfereinrichtung nach Anspruch 1, **dadurch gekennzeichnet**, daß die Sperreinrichtung (24, 34) die Form eines Streifens (24) aufweist, der an dem Reflektor (14) oder dem Träger (10) befestigt ist, daß andererseits an dem Träger (10) oder dem Reflektor (14) ein Bock (34) angebracht ist, an dem der Streifen (24) festlegbar ist und von dem Streifen lösbar ist, um ein Drehen des Reflektors (14) relativ zum Träger (10) zu verhindern und zu ermöglichen.

3. Scheinwerfereinrichtung nach Anspruch 2, **dadurch gekennzeichnet**, daß der Streifen (24) elastisch ist und der Bock (34) eine Schrägfläche (32) aufweist, die zu einer Ausnehmung (40) im Bock (34) führt, das Ganze derart, daß der Streifen (24) bei einer Drehbewegung des Reflektors durch die Schrägfläche (32) abgelenkt wird, so daß der Streifen (24) automatisch in die Ausnehmung (40) einschnappen kann.

4. Scheinwerfereinrichtung nach Anspruch 2 oder 3, **dadurch gekennzeichnet**, daß der Träger (10) eine Öffnung (36) aufweist, damit der Verstellmechanismus (22) an dem Gebilde (16) an den Reflektor (14) angreifen kann, und daß der Bock (34) neben der Öffnung angeordnet ist, so daß der Streifen davon von Hand weggenommen werden kann, wobei der Zugang zu dem Bock durch die Öffnung (36) vorgesehen ist.

5. Schweinwerfereinrichtung nach Anspruch 4, **dadurch gekennzeichnet**, daß ein Platte oder Abdeckung (54) vorgesehen ist, welche die Öffnung (36) abdeckt und den Streifen (24) daran hindert, automatisch in den Bock (34) einzugreifen.

6. Scheinwerfereinrichtung nach Anspruch 5, **dadurch gekennzeichnet**, daß die Platte oder Abdeckung (54) ein Lager für ein Teil des Verstellmechanismus (22) ist, das an dem Träger (10) anzubringen ist.

**Revendications**

1. Montage de phare pour véhicule automobile comprenant un corps de réflecteur (14); un élément de support (10) conçu pour être fixé à demeure sur un véhicule automobile; des moyens de pivot destinés à monter le corps de réflecteur (14) sur l'élément de support (10) pour que le corps de réflecteur (14) puisse y effectuer un mouvement de pivotement; ainsi qu'une structure (16) disposée sur le corps de réflecteur (14), conçue pour venir s'engrener avec un mécanisme de réglage (22), lors de la mise en service, de telle sorte que la mise en oeuvre du mécanisme de réglage (22) fait pivoter le corps de réflecteur (14) par rapport à l'élément de support (10); **caractérisé en ce qu'**un dispositif de retenue (24, 34) s'étend entre le corps de réflecteur (14) et l'élément de support (10) et est conçu pour retenir le corps de réflecteur (14) à l'encontre du mouvement de pivotement par rapport à l'élément de support (10), au moins lors de l'engrènement du mécanisme de réglage (22) avec ladite structure (16), ledit dispositif de retenue (24, 34) étant apte à se désengrener pour permettre le pivotement du corps de réflecteur (14) par rapport à l'élément de support (10) lorsque le mécanisme de réglage (22) a été engrené avec ladite structure (16) disposée sur le corps de réflecteur (14).

2. Montage selon la revendication 1, dans lequel le dispositif de retenue (24, 34) prend la forme d'une attache (24) fixée soit au corps de réflecteur (14), soit à l'élément de support (10), ainsi qu'une bride de fixation (34) fixée à l'autre de ces éléments, à savoir le corps de réflecteur (14) et l'élément de support (10), l'attache (24) étant apte à s'engrener avec la bride de fixation (34) et à se désengrener de cette dernière, respectivement, pour empêcher et permettre le mouvement de pivotement du corps de réflecteur (14) par rapport à l'élément de support (10).

3. Montage selon la revendication 2, dans lequel l'attache (24) est résiliente et la bride de fixation (34) englobe une surface (32) présentant une déclivité, qui conduit à un évidement (40) pratiqué dans la bride de fixation (34), l'arrangement étant tel que l'attache (24) est déviée par la surface (32) présentant une déclivité lors du mouvement de pivotement du réflecteur, de telle sorte que l'attache (24) puisse s'encliqueter automatiquement dans l'évidement (40).

4. Montage selon la revendication 2 ou 3, dans lequel on pratique une ouverture (36) dans l'élément de support (10) pour permettre l'engrènement du mécanisme de réglage (22) avec la structure (16) disposée sur le corps de réflecteur (14) et on dispose la bride de fixation (34) en position adjacente à l'ouverture de telle sorte que l'on puisse en désengrener manuellement l'attache, l'accès à la bride de fixation étant fourni par l'ouverture (36).

5. Montage selon la revendication 4, englobant une plaque ou un élément de recouvrement (54), qui est conçu pour recouvrir l'ouverture (36) et pour empêcher l'attache (24) de s'engrener automatiquement dans la bride de fixation (34).

6. Montage selon la revendication 5, dans lequel la plaque ou l'élément de recouvrement (54) procure un montage pour une partie du mécanisme de réglage (22), qui doit venir se fixer à l'élément de support (10).

FIG.1.

FIG.2.

FIG.3